# EUROPEAN PATENT APPLICATION

(11) **EP 4 116 056 A2**
(43) Date of publication of application: **11.01.2023**
(21) Application number: 22179948.9
(22) Date of filing: 20.06.2022
(51) Int. Cl.: B29C 33/12, B29B 11/06, B29C 70/30, B29C 70/54, B28B 11/00

(54) **PRESSING A MULTI-LAYERED PREFORM INTO A SHAPED BODY**

(30) Priority: 18.06.2021 US 202163212264 P; 18.01.2022 US 202263300390 P; 03.06.2022 US 202217832485
(71) Applicant: Rohr, Inc., Chula Vista, CA 91910-2098 (US)
(72) Inventor: PUJAR, Vijay V., San Diego, 92127 (US); KOROLY, Christopher C., Spring Valley, 91977 (US); LINCK, John S., Pueblo, 81001 (US); KUKUCHEK, Paul E., San Diego, 92131 (US); LEMANSKI, Joseph R., Chula Vista, 91910 (US); SALAH, Lamia, San Diego, 92130 (US)
(74) Representative: Dehns

(57) **Abstract**

During a manufacturing method, a preform is arranged with a plurality of grips. The preform includes a stack of a plurality of layers of material. The grips are disposed along a periphery of the stack. The preform is formed into a shaped body. The forming includes pressing a die against the stack and gripping the stack with the grips during the pressing of the die. The gripping includes asynchronously gripping the stack with at least some of the grips.

## Description

### FIELD

The present disclosure (invention) relates generally to forming a preform into a shaped body.

### BACKGROUND

Shaped composite bodies are utilized in aerospace applications. Various systems and methods are known in the art for forming a preform into a shaped body. While these known systems and methods have various advantages, there is still room in the art for improvement. There is a need in the art therefore for improved systems and methods for forming a preform into a shaped body.

### SUMMARY

According to an aspect of the present invention, a manufacturing method is provided. During this manufacturing method, a preform is arranged with a plurality of grips. The preform includes a stack of a plurality of layers of material. The grips are disposed along a periphery of the stack. The preform is formed into a shaped body. The forming includes pressing a die against the stack and gripping the stack with the grips during the pressing of the die. The gripping includes asynchronously gripping the stack with at least some of the grips.

According to an aspect of the present invention, another manufacturing method is provided. During this manufacturing method, a preform is arranged with a plurality of grips. The preform includes a stack of a plurality of layers of material. The grips are disposed along a periphery of the stack. The preform is formed into a shaped body. The forming includes: pressing the stack into a recess of a bottom die using a top die; and gripping the stack with the grips during the pressing of the stack. An orientation of the top die relative to the bottom die changes as the top die moves towards the bottom die.

According to an aspect of the present invention, a system is provided for forming a preform into a shaped body, where the preform includes a stack of a plurality of layers of material which include a first layer of material and a second layer of material. The system includes a first die, a second die and a plurality of grips. The second die includes a recess. The first die is configured to press the stack of the layers of material into the recess where the first die engages the first layer of material and the second die engages the second layer of material. The grips are arrangeable along a periphery of the stack of the layers of material. The grips are configured to selectively grip the stack of the layers of material as the first die presses the stack of the layers of material into the recess. The grips include a first grip and a second grip that is discretely actuatable from the first grip.

The following optional features may be applied to any of the above aspects.

The gripping may include asynchronously gripping the stack with a first of the grips and a second of the grips.

The grips may include a first grip and a second grip. The asynchronously gripping may include: gripping the stack with the first grip for a first period of time; and gripping the stack with the second grip for a second period of time that is different than the first period of time.

The grips may include a first grip and a second grip. The asynchronously gripping may include: gripping the stack with the first grip starting at a first point in time; and gripping the stack with the second grip starting at a second point in time that is different than the first point in time.

The grips may include a first grip and a second grip. The asynchronously gripping may include: relinquishing grip of the stack by the first grip at a first point in time; and relinquishing grip of the stack by the second grip at a second point in time that is different than the first point in time.

The grips may include a first grip and a second grip. The first grip and the second grip may be disposed longitudinally along the die and to a common lateral side of the die. The first grip and the second grip may asynchronously grip the stack during the pressing of the die.

The grips may include a first grip and a second grip. The first grip and the second grip may be disposed on opposing lateral sides of the die. The first grip and the second grip may asynchronously grip the stack during the pressing of the die.

The layers of material may include a first layer of material. The die and the grips may engage the first layer of material during the forming.

The layers of material may include a first layer of material and a second layer of material. The die may engage the second layer of material during the forming. The grips may engage the first layer of material during the forming.

The grips may include a first grip. The first grip may press the stack against a base to grip the stack with the first grip.

The layers of material may include a first layer of material and a second layer of material. The first layer of material may engage and may be held by the first grip while the first grip grips the stack. The second layer of material may engage and may be slidable against the second grip while the second grip grips the stack.

The layers of material may include a first layer of material and a second layer of material. The first layer of material may engage and may be held by the first grip while the first grip grips the stack. The second layer of material may engage and may be held by the second grip while the second grip grips the stack.

The die may be configured as a first die. The first die may press the stack into a recess in a second die during the forming.

The recess may be configured with a three-dimensional curvature.

An orientation of the first die may change relative to the second side during the forming.

The gripping of the stack with the grips may be synchronized with the changing of the orientation of the first die relative to the second die.

Each of the layers of material may include woven fibrous material.

The preform may be drawn over the die to press the die against the stack.

The present disclosure may include any one or more of the individual features disclosed above and/or below alone or in any combination thereof.

The foregoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

FIG. 1 is a schematic sectional illustration of a system for forming a preform into a shaped body with its dies and grips closed, in accordance with various embodiments.
FIG. 2 is a perspective illustration of a bottom die, in accordance with various embodiments.
FIG. 3 is a perspective illustration of a top die, in accordance with various embodiments.
FIG. 4 is a perspective illustration of a plurality of grips arranged with the bottom die, in accordance with various embodiments.
FIG. 5 is a schematic sectional illustration of a portion of a stack of layers of material gripped between one of the grips and the bottom die, in accordance with various embodiments.
FIG. 6 is a schematic sectional illustration of the formation system with its dies and grips open, in accordance with various embodiments.
FIG. 7 is a flow diagram of a method for forming the preform into the shaped body, in accordance with various embodiments.
FIGS. 8A and 8B schematically illustrate a stroke of the top die where the orientation of the top die changes relative to the bottom die along the stroke, in accordance with various embodiments.
FIG. 9 is a perspective illustration of another arrangement of the grips with another bottom die, in accordance with various embodiments.
FIG. 10 is a schematic illustration of an interface between the bottom die, the top die, one of the grips and the stack of the layers of material, in accordance with various embodiments.
FIG. 11 is a schematic sectional illustration of a portion of the stack of the layers of material gripped between one of the grips and a base, in accordance with various embodiments.
FIGS. 12A and 12B schematically illustrate the stack of the layers of material being drawn over a die, in accordance with various embodiments.

### DETAILED DESCRIPTION

All ranges and ratio limits disclosed herein may be combined. It is to be understood that unless specifically stated otherwise, references to "a," "an," and/or "the" may include one or more than one and that reference to an item in the singular may also include the item in the plural.

The detailed description of exemplary embodiments herein makes reference to the accompanying drawings, which show exemplary embodiments by way of illustration and its best mode, and not of limitation. While these exemplary embodiments are described in sufficient detail to enable those skilled in the art to practice the invention, it should be understood that other embodiments may be realized and that logical, chemical and mechanical changes may be made without departing from the spirit and scope of the invention. For example, the steps recited in any of the method or process descriptions may be executed in any order and are not necessarily limited to the order presented. Moreover, many of the functions or steps may be outsourced to or performed by one or more third parties. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact.

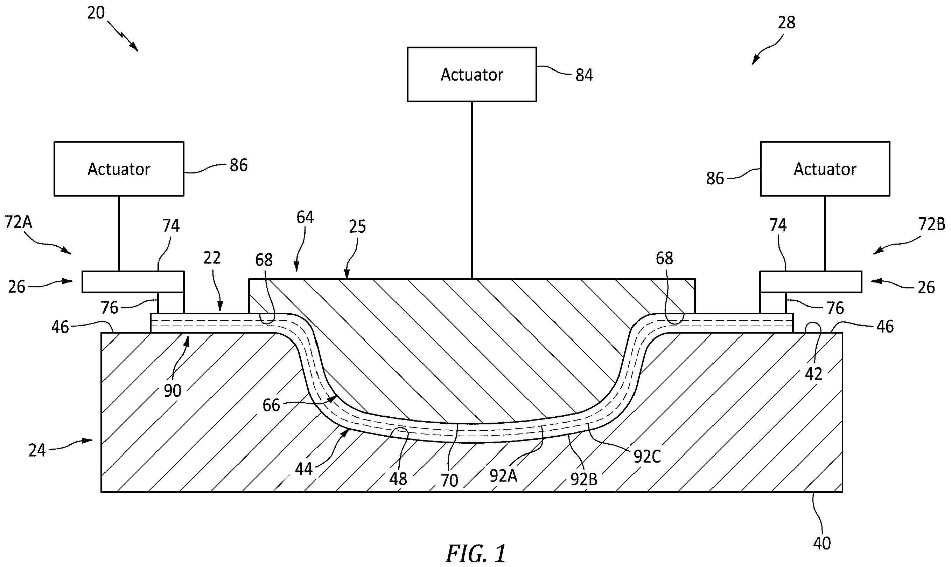

FIG. 1 illustrates a system 20 for forming a shaped body 22 from a multi-layered preform; e.g., a stack of a plurality of layers of material. This formation system 20 of includes one or more dies 24 and 25 and one or more grips 26. The formation system 20 of FIG. 1 also includes an actuation system 28.

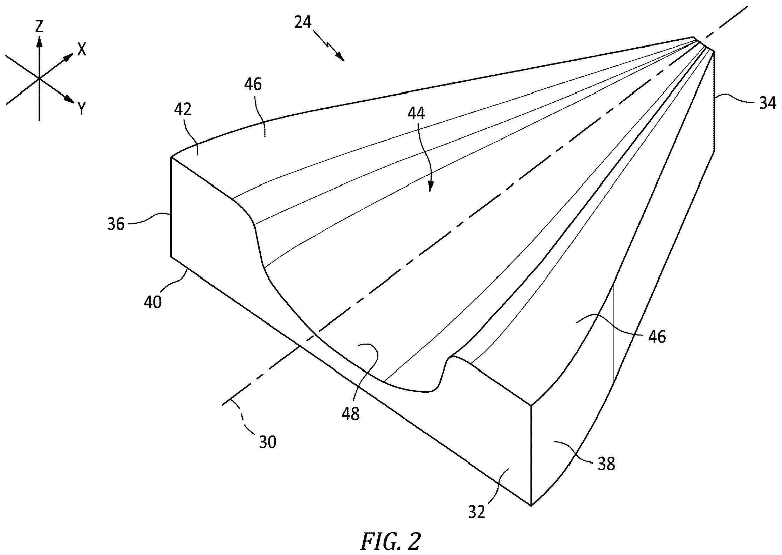

Referring to FIG. 2, the bottom die 24 extends longitudinally along a longitudinal centerline 30 of the bottom die 24 (e.g., along an x-axis) between and to a first end 32 of the bottom die 24 and a second end 34 of the bottom die 24. The bottom die 24 extends laterally (e.g., along a y-axis) between and to a first side 36 of the bottom die 24 and a second side 38 of the bottom die 24. The bottom die 24 extends vertically (e.g., along a z-axis) between and to a bottom side 40 of the bottom die 24 and a top side 42 of the bottom die 24.

The bottom die 24 is configured with at least one die recess 44; e.g., an aperture such as a pocket, a channel, a groove, etc. The die recess 44 of FIG. 2 extends (e.g., partially) vertically into the bottom die 24 from one or more top surfaces 46 of the bottom die 24 to a recess surface 48 of the bottom die 24, where the top surfaces 46 of FIG. 2 are arranged on opposing sides of the recess surface 48 at the bottom die top side 42. The die recess 44 of FIG. 2 extends longitudinally in (e.g., through) the bottom die 24, for example, between and to the bottom die first end 32 and/or the bottom die second end 34. The die recess 44 of FIG. 2 extends laterally in (e.g., within) the bottom die 24, for example, between opposing lateral sides of the recess surface 48.

The recess surface 48 is a concave or concave-convex surface and may have a curved geometry; e.g., a three-dimensional (3D) curvature. The recess surface 48 of FIG. 2, for example, has a curved (e.g., arcuate, splined, etc.) cross-sectional geometry in a lateral-vertical reference plane; e.g., a y-z plane. The recess surface 48 of FIG. 2 also has a curved (e.g., arcuate, splined, etc.) cross-sectional geometry in a longitudinal-vertical reference plane; e.g., a x-z plane. This recess curvature may change as the recess surface 48 / the die recess 44 extends laterally and/or longitudinally, which may provide the recess surface 48 with a complex 3D curvature. Of course, in other embodiments, the recess curvature may remain uniform as the recess surface 48 / the die recess 44 extends laterally and/or longitudinally. The recess surface 48, however, may be configured without any sharp corners or sharp transitions.

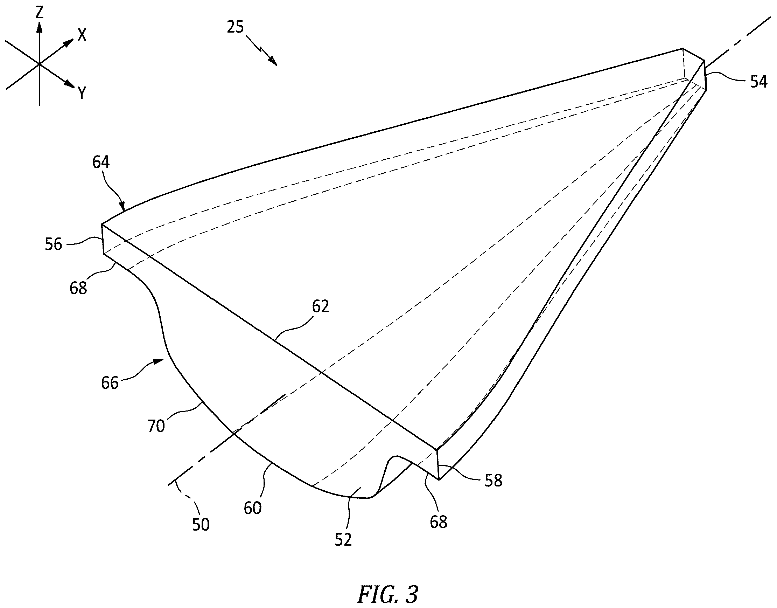

Referring to FIG. 3, the top die 25 extends longitudinally along a longitudinal centerline 50 of the top die 25 between and to a first end 52 of the top die 25 and a second end 54 of the top die 25. The top die 25 extends laterally between and to a first side 56 of the top die 25 and a second side 58 of the top die 25. The top die 25 extends vertically between and to a bottom side 60 of the top die 25 and a top side 62 of the top die 25.

The top die 25 includes a die base 64 and at least one die protrusion 66 connected to (e.g., formed integral with) the die base 64. The die protrusion 66 of FIG. 3 projects vertically out from one or more bottom surfaces 68 of the die base 64 to a surface 70 of the die protrusion 66, where the bottom surfaces 68 of FIG. 3 are arranged on opposing sides of the die base bottom surface 68, and where each bottom surface 68 is disposed at a respective interface between the die base 64 and the die protrusion 66. The die protrusion 66 of FIG. 3 extends longitudinally along the die base 64, for example, between and to the top die first end 52 and/or the top die second end 54. The die protrusion 66 of FIG. 3 extends laterally in along the die base 64, for example, between opposing lateral sides of the protrusion surface 70.

The protrusion surface 70 of FIG. 3 is a convex or convex-concave surface and may have a curved geometry; e.g., a three-dimensional (3D) curvature. The protrusion surface 70 of FIG. 3, for example, has a curved (e.g., arcuate, splined, etc.) cross-sectional geometry in a lateral-vertical reference plane; e.g., a y-z plane. The protrusion surface 70 of FIG. 3 also has a curved (e.g., arcuate, splined, etc.) cross-sectional geometry in a longitudinal-vertical reference plane; e.g., a x-z plane. This protrusion curvature may change as the protrusion surface 70 / the die protrusion 66 extends laterally and/or longitudinally, which may provide the protrusion surface 70 with a complex 3D curvature. Of course, in other embodiments, the protrusion curvature may remain uniform as the protrusion surface 70 / the die protrusion 66 extends laterally and/or longitudinally. The protrusion surface 70, however, may be configured without any sharp corners or sharp transitions.

Referring to FIG. 1, the die protrusion 66 is configured to mate with (e.g., projected vertically into) the die recess 44 during formation system operation. The curvature of the protrusion surface 70 therefore may be configured to match the curvature of the recess surface 48; however, the protrusion surface 70 is (e.g., proportionally) dimensioned smaller than the recess surface 48 to facilitate presence of the shaped body 22 between the bottom die 24 and the top die 25.

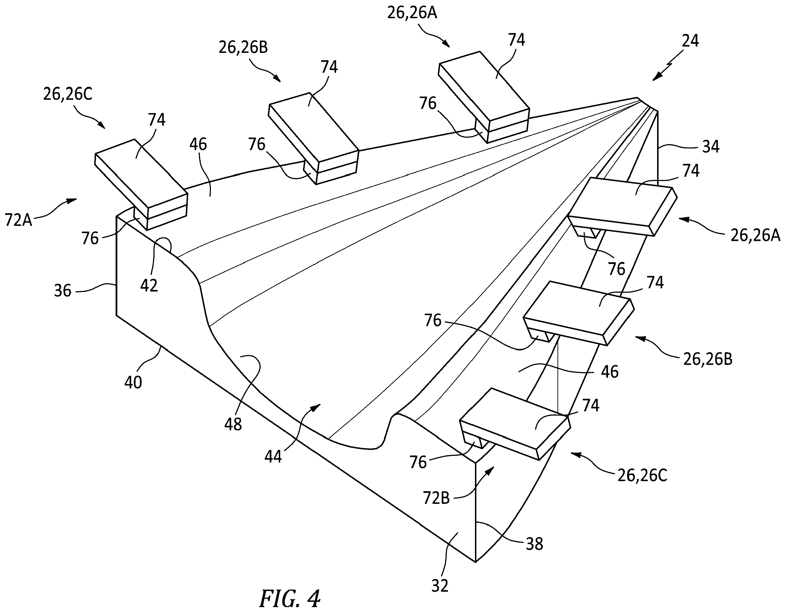

Referring to FIG. 4, the grips 26 may be arranged in one or more arrays 72A and 72B (generally referred to as "72"). Each grip array 72 of FIG. 4 is disposed along a respective opposing side 36, 38 of the bottom die 24. The grips 26 in each grip array 72 may be longitudinally spaced from each neighboring (e.g., adjacent) grip 26 in the same grip array 72.

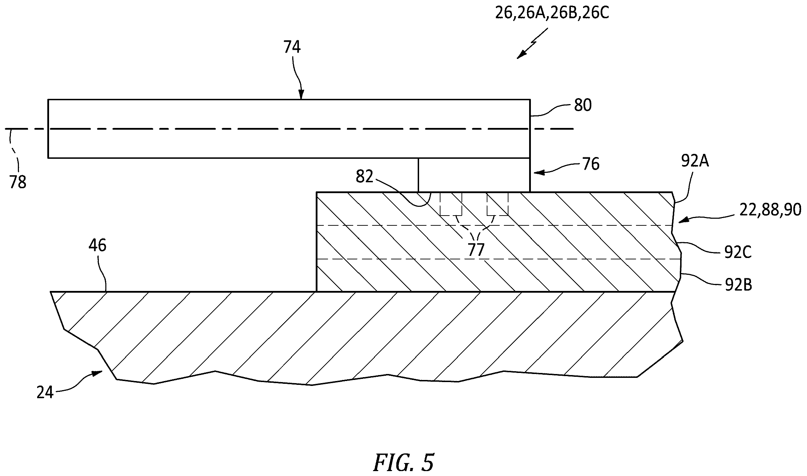

Referring to FIG. 5, each grip 26 may include a grip arm 74 and a grip member 76. The grip arm 74 of FIG. 5 extends along a centerline 78 of the respective grip arm 74 (e.g., generally laterally in FIG. 4) to a distal end 80 of the respective grip 26. The grip member 76 is connected to (e.g., attached to or formed integral with) the grip arm 74 at the distal end 80. The grip member 76 of FIG. 5 projects vertically out from the grip arm 74 to a grip surface 82.

The grip surface 82 is configured with a relatively high coefficient of static friction and/or kinetic friction, whereas each bottom die top surface 46 may be configured with a relatively low coefficient of static friction and/or kinetic friction. The grip surface 82, for example, may be textured whereas each bottom die top surface 46 may be smooth; e.g., polished. The grip surface 82 and, more particularly, the grip member 76 may also or alternatively be formed from a material with a higher coefficient of static friction and/or kinetic friction than the material of the bottom die 24.

The grip surface 82 of FIG. 5 is aligned with a respective portion of the bottom die top surface 46. The grip surface 82 of FIG. 5, for example, at least partially or completely laterally and/or longitudinally overlaps the respective portion of the bottom die top surface 46.

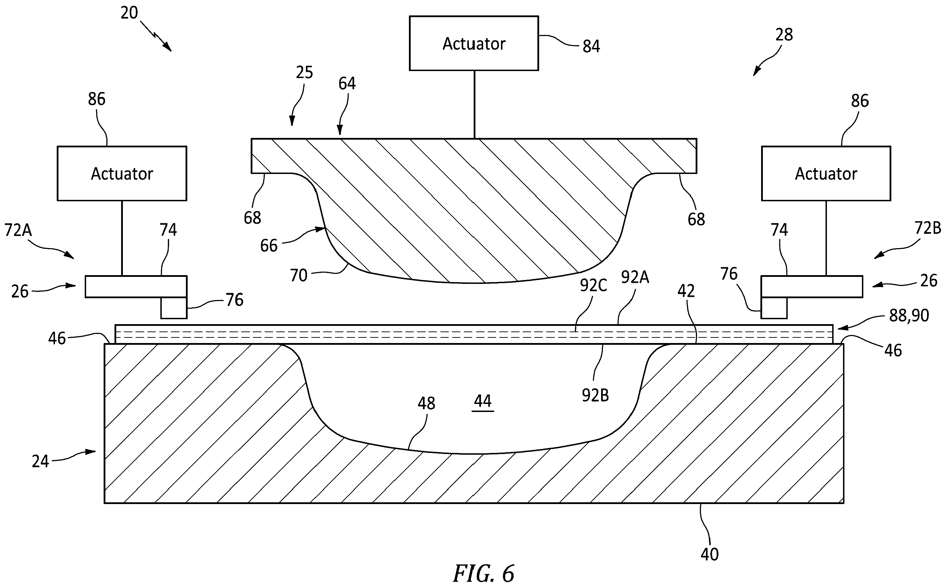

Referring to FIG. 1, the actuation system 28 is configured to move one or more of the formation system components 24-26. The actuation system 28 of FIG. 1, for example, includes a die actuator 84 and one or more grip actuators 86. The die actuator 84 is configured to move the top die 25 between an open position (e.g., see FIG. 6) and a closed position (e.g., see FIG. 1). Each grip actuator 86 is arranged with a respective one of the grips 26, and is configured to move the respective grip 26 between an open position (e.g., see FIG. 6) and a closed position (e.g., see FIG. 1).

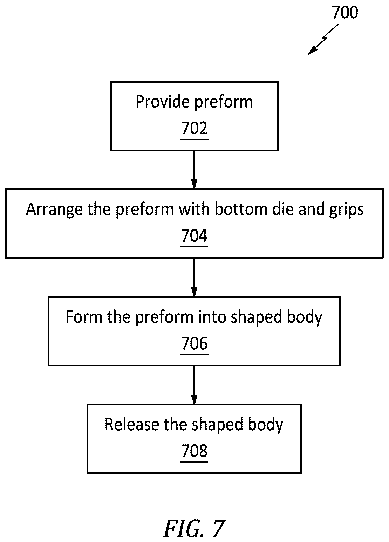

FIG. 7 is a flow diagram of a method 700 for forming a preform 88 into the shaped body 22. For ease of description, the method 700 is described below with reference to FIGS. 1 and 6. The method 700 of the present disclosure, however, is not limited to use of the exemplary formation system 20 of FIGS. 1 and 6.

In step 702, the preform 88 is provided. This preform 88 may be configured as a multi-layered preform. The preform 88 of FIG. 6, for example, includes a stack 90 of a plurality of layers of material 92A-C (generally referred to as "92"). This stack 90 includes the top layer of material 92A at / forming a top side of the preform 88 and the bottom layer of material 92B at / forming a bottom side of the preform 88. The stack 90 may also include at least one (or more) intermediate layer of material 92C vertically between the top layer of material 92A and the bottom layer of material 92B.

Each layer of material 92 may share a common (e.g., the same) construction and/or material makeup. Each layer of material 92 in the stack 90, for example, may be formed by a sheet / layer of fibrous material; e.g., woven carbon fiber, woven oxidized polyacrylonitrile (PAN) fibers, non-crimp fabric, etc. One or more or all of the layers of material 92 may each be impregnated with a polymer matrix; e.g., thermoset material or thermoplastic material. One or more or all of the layers of material 92 may alternatively each be unimpregnated (e.g., only include the fibrous material) where, for example, the preform material is impregnated subsequent to formation of the shaped body 22. The method 700 of the present disclosure, however, is not limited to such exemplary layer materials. For example, in other embodiments, one or more or all of the layers of material 92 may each be formed from a polymer material without fiber-reinforcement; e.g., a thermoplastic sheet.

In step 704, the preform 88 is arranged with the bottom die 24 and the grips 26. The preform 88 and its stack 90 of FIG. 6, for example, are disposed on the bottom die 24 at its top side 42. The bottom layer of material 92B engages (e.g., vertically contacts, is abutted against, lays flush on, etc.) the bottom die top surfaces 46. The top layer of material 92A is disposed next to and under the grips 26 and their grip members 76. The grips 26 and the grip members 76 of FIG. 6, for example, are disposed along a periphery of the preform 88 and its stack 90. More particularly, each of the grip members 76 in the first grip array 72A of FIG. 6 (see also FIG. 4) longitudinally and laterally overlaps the preform 88 and its stack 90 along a first side of the periphery. Each of the grip members 76 in the second grip array 72B of FIG. 6 (see also FIG. 4) longitudinally and laterally overlaps the preform 88 and its stack 90 along a second side of the periphery.

In the arrangement of FIG. 6, the preform 88 and its stack 90 of the layers of material 92 may have a planar configuration. Prior to forming the shaped body 22, for example, the preform 88 and its stack 90 of the layers of material 92 may be configured as a flat plate. Of course, in other embodiments, one or more of the layers of material 92 in the stack 90 may slightly bend (e.g., droop) into the die recess 44.

In step 706, the preform 88 is formed into the shaped body 22. During this formation step 706, the top die 25 may move (e.g., downward) vertically from the (e.g., open) position of FIG. 6 to the (e.g., closed) position of FIG. 1. As the top die 25 moves, the top die 25 vertically engages a portion of the preform 88 and its stack 90 that overlaps (e.g., spans laterally and longitudinally across) the die recess 44. More particularly, the die protrusion 66 and its protrusion surface 70 vertically press against the top layer of material 92A. As the top die 25 continues to move to its (e.g., closed) position of FIG. 1, the protrusion surface 70 and the recess surface 48 collectively reshape the stack 90 of the layers of material 92 to conform to (e.g., take the shape of) the recess surface 48. The preform 88 and its stack 90 of the layers of material 92, more particularly, are press formed (e.g., stamped) into the shaped body 22 between the top die 25 and its protrusion surface 70 and the bottom die 24 and its recess surface 48.

During the pressing, the grips 26 selectively grip the preform 88 and its stack 90 of the layers of material 92. Each grip 26 and its grip member 76 of FIG. 5, for example, vertically engage (e.g., contact, press against) the top layer of material 92A, which may clamp the stack 90 of the layers of material 92 vertically between the respective grip 26 and its grip member 76 and the bottom die 24 and its top surface 46. The relatively low coefficient of friction of the respective bottom die top surface 46 may facilitate sliding of the bottom layer of material 92B (and in some cases the intermediate layer(s) of material 92C) along the bottom die 24. The relatively high coefficient of friction of the grip member 76, on the other hand, may anchor (or slow sliding of) the top layer of material 92A against the grip 26 and its grip member 76. The grips 26 may thereby facilitate differential movement (e.g., sliding, pulling, etc.) between the layers of material 92 in the stack 90, which may reduce bunching, kinking and/or other deformation of the stack 90 of the layers of material 92 during the forming of the shaped body 22.

The differential movement between the layers of material 92 in the stack 90 may be tuned by individually activating and deactivating the grips 26 depending on the specific configuration of the die recess 44, the die protrusion 66 and/or material properties of the preform 88 and its stack 90. The actuation system 28, for example, may asynchronously activate and/or deactivate the grips 26 along each side of the die recess 44; e.g., along each side 36, 38. For example, referring to FIGS. 1, 4 and 5, the first grip 26A may be activated (e.g., clamped against the stack 90, grip the stack 90, etc.) by its grip actuator 86 at a first point in time. The second grip 26B may by activated by its grip actuator 86 at a second point in time that is different than (e.g., subsequent to) the first point in time. The third grip 26C may by activated by its grip actuator 86 at a third point in time that is different than (e.g., subsequent to) the second point in time and/or the first point in time. In addition or alternatively, the first grip 26A may be deactivated (e.g., unclamped from the stack 90, relinquish grip of the stack 90, etc.) by its grip actuator 86 at a first point in time. The second grip 26B may by deactivated by its grip actuator 86 at a second point in time that is different than (e.g., subsequent to) the first point in time. The third grip 26C may by deactivated by its grip actuator 86 at a third point in time that is different than (e.g., subsequent to) the second point in time and/or the first point in time.

Various other activation and deactivation programs are possible in addition or alternatively to that described above. For example, some of the grips 26 may be activated and/or deactivated synchronously whereas one or more other grips 26 may be activated and/or deactivated asynchronously. One or more of the grips 26 may be activated for a different period of time (e.g., duration) than another one or more of the grips 26. Some or all of the grips 26 may be synchronously or asynchronously activated and/or deactivated depending on location; e.g., longitudinal location, lateral location, etc. Some or all of the grips 26 may be activated and/or deactivated in stages, where actuation of the grips 26 may be synchronously or asynchronously depending on the stage. The present disclosure therefore is not limited to any particular grip activation or deactivation programs.

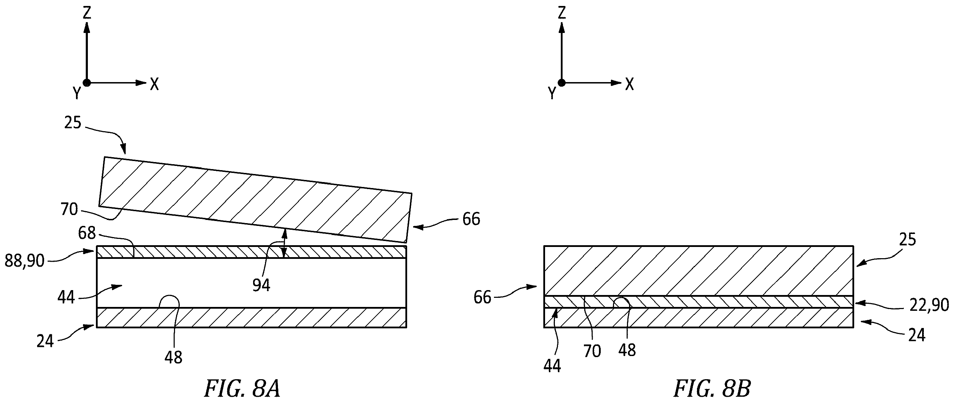

To further tune the forming of the shaped body 22, the orientation of the top die 25 relative to the bottom die 24 may change during its vertical stroke; e.g., movement from the position of FIG. 6 to the position of FIG. 1. For example, referring to FIG. 8A, one or more of the die base bottom surfaces 68 may each be angularly offset from at least one of the bottom die top surfaces 46 by an (e.g., acute) angle 94 when the top die 25 initially engages the preform 88 and its stack 90. However, referring to FIG. 8B, the die base bottom surface(s) 68 may be parallel with the bottom die top surface(s) 46 (hidden in FIG. 8B) (or angularly offset from the bottom die top surface(s) 46 by an angle different than the angle 84) when the stack 90 of the layers of material 92 is fully pressed between the top die 25 and the bottom die 24. The top die 25, for example, may pitch about the y-axis as the top die 25 is moved vertically by the die actuator 84 (see FIG. 1) from its open position to its closed position. The top die 25 may also or alternatively roll about the x-axis as the top die 25 is moved vertically by the die actuator 84 (see FIG. 1) from its open position to its closed position. In some embodiments, the activation and/or the deactivation of the grips 26 may be coordinated with the reorienting of the top die 25 relative to the bottom die 24.

In step 708, the shaped body 22 is released from the formation system 20. The top die 25 of FIGS. 1 and 6, for example, is moved vertically away from the bottom die 24 by its die actuator 84. The grips 26 are similarly deactivated (if not done so already during the forming). The shaped body 22 may thereby be removed from the die recess 44 for further processing.

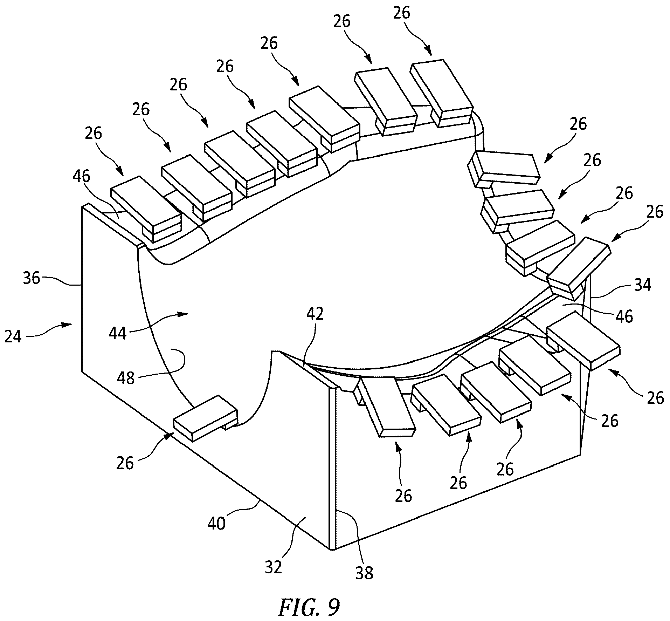

In some embodiments, referring to FIG. 2, one or more of the bottom die top surfaces 46 may each be planar; e.g., flat, non-curved, etc. In other embodiments, referring to FIG. 9, at least a portion or an entirety of one or more of the bottom die top surfaces 46 may each be non-planar; e.g., concave, convex, etc.

In some embodiments, referring to FIG. 5, one or more of the grips 26 may also include one or more protrusions 77 for penetrating into the preform 88. The protrusions 77 may thereby lock a portion of the preform 88 in place; e.g., constrain movement of the respective engaged preform portion.

In some embodiments, one or more of the grips 26 may be arranged at the ends 32 and 34 of the bottom die 24.

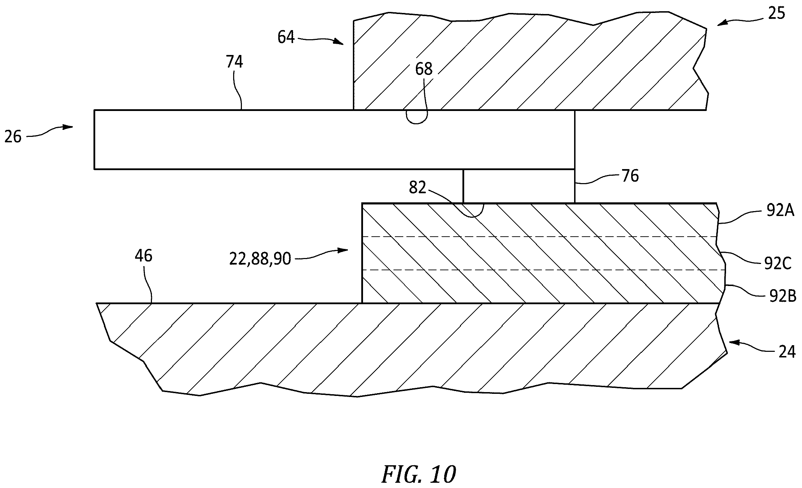

In some embodiments, referring to FIG. 10, one or more of the grips 26 may be passively actuated. For example, the die base 64 may engage (e.g., contact) each respective grip arm 74 and press that grip arm 74 towards the stack 90.

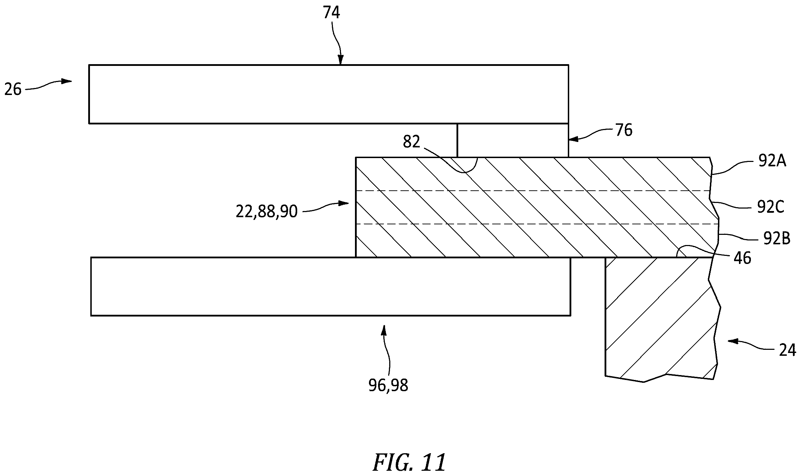

In some embodiments, referring to FIG. 11, one or more of the grips 26 may each be paired with a base 96 that is different than and discrete from the bottom die 24. For example, a bottom grip arm 98 may be included which vertically engages the stack 90 and its bottom layer of material 92B. This bottom grip arm 98 may be configured with a lower coefficient of static and/or kinetic friction than the grip member 76 such that the stack 90 and its bottom layer of material 92B may slide against the bottom grip arm 98. However, it is contemplated the bottom grip arm 98 may also be configured with a bottom grip member (not shown; similar to member 76) for engaging the bottom layer of material 92B.

In some embodiments, each of the grips 26 may move along a single axis; e.g., vertically up and down. In other embodiments, one or more or all of the grips 26 may each move along multiple axes; e.g., vertically up and down, horizontally side to side, and/or horizontally in and out, etc. One or more of all of the grips 26 may also or alternatively each rotate about one or more axes; e.g., the x-axis, the y-axis and/or the z-axis.

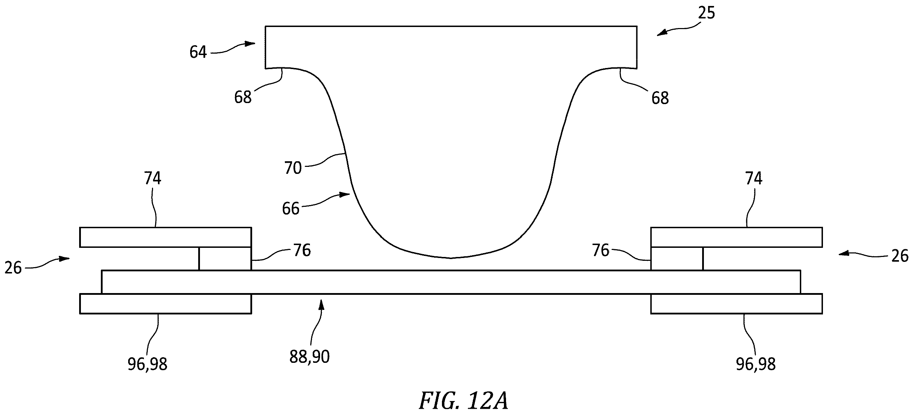

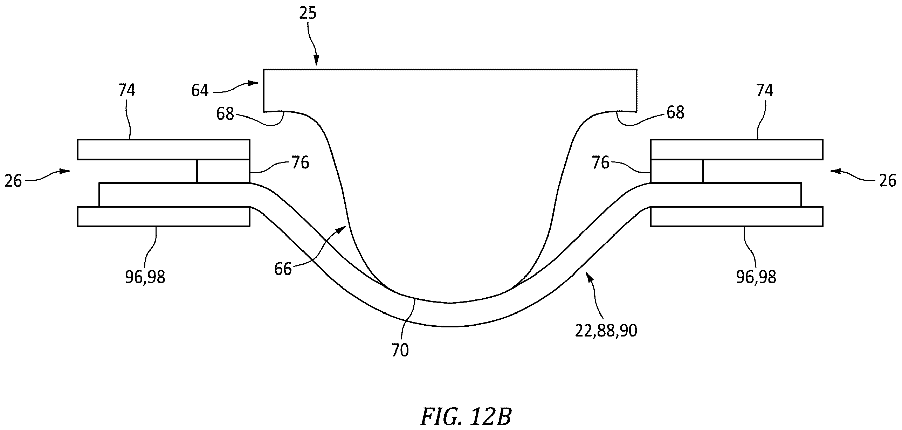

In some embodiments, referring to FIG. 12A and 12B, one or more of the grips 26 may move vertically relative to a die; e.g., the top die 25. The grips 26 of FIGS. 12A and 12B, for example, may be configured to draw the preform 88 and its stack 90 over the die protrusion 66. This drawing may occur where the grips 26 move vertically towards the top die 25 (e.g., vertically up in FIGS. 12A and 12B) and/or where the top die 25 moves vertically towards the preform 88 and its stack 90 (e.g., vertically down in FIGS. 12A and 12B). The grips 26 may selectively activate and/or deactivate to tune formation of the shaped body 22 over the die protrusion 66.

The formation system 20 and its components 24 and 25 are described above using the terms "bottom" and "top" with reference to exemplary orientations in the drawings. The present disclosure, however, is not limited to any particular formation system orientations. For example, in other embodiments, the die 24 may alternatively be configured as a top die and the die 25 may alternatively be configured as a bottom die.

Systems and methods are provided. In the detailed description herein, references to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Benefits, other advantages, and solutions to problems have been described herein with regard to specific embodiments. However, the benefits, advantages, solutions to problems, and any elements that may cause any benefit, advantage, or solution to occur or become more pronounced are not to be construed as critical, required, or essential features or elements of the invention. The scope of the invention is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A manufacturing method, comprising:
arranging a preform with a plurality of grips, the preform comprising a stack of a plurality of layers of material, and the plurality of grips disposed along a periphery of the stack;
forming the preform into a shaped body, the forming comprising pressing a die against the stack and gripping the stack with the plurality of grips during the pressing of the die, and the gripping comprising asynchronously gripping the stack with at least some of the plurality of grips,
wherein the plurality of grips optionally include a first grip and a second grip.

2. The manufacturing method of claim 1, wherein
the asynchronously gripping comprises
gripping the stack with the first grip for a first period of time; and
gripping the stack with the second grip for a second period of time that is different than the first period of time.

3. The manufacturing method of claim 1, wherein
the asynchronously gripping comprises
gripping the stack with the first grip starting at a first point in time; and
gripping the stack with the second grip starting at a second point in time that is different than the first point in time.

4. The manufacturing method of claim 1, wherein
the asynchronously gripping comprises
relinquishing grip of the stack by the first grip at a first point in time; and
relinquishing grip of the stack by the second grip at a second point in time that is different than the first point in time.

5. The manufacturing method of any preceding claim, wherein
the first grip and the second grip are disposed longitudinally along the die and to a common lateral side of the die; and
the first grip and the second grip asynchronously grip the stack during the pressing of the die.

6. The manufacturing method of any of claims 1-4, wherein
the first grip and the second grip are disposed on opposing lateral sides of the die; and
the first grip and the second grip asynchronously grip the stack during the pressing of the die.

7. The manufacturing method of any preceding claim, wherein:
the plurality of layers of material comprise a first layer of material, and the die and the plurality of grips engage the first layer of material during the forming; and/or
the plurality of layers of material comprise a first layer of material and a second layer of material, the die engages the second layer of material during the forming, and the plurality of grips engage the first layer of material during the forming.

8. The manufacturing method of any preceding claim, wherein
the plurality of grips comprise a first grip; and
the first grip presses the stack against a base to grip the stack with the first grip.

9. The manufacturing method of claim 8, wherein:
the plurality of layers of material comprise a first layer of material and a second layer of material, the first layer of material engages and is held by the first grip while the first grip grips the stack, and the second layer of material engages and is slidable against the second grip while the second grip grips the stack; and/or
the plurality of layers of material comprise a first layer of material and a second layer of material, the first layer of material engages and is held by the first grip while the first grip grips the stack, and the second layer of material engages and is held by the second grip while the second grip grips the stack.

10. The manufacturing method of any preceding claim, wherein
the die comprises a first die; and
the first die presses the stack into a recess in a second die during the forming, wherein the recess is optionally configured with a three-dimensional curvature.

11. The manufacturing method of claim 10, wherein an orientation of the first die changes relative to the second side during the forming, wherein the gripping of the stack with the plurality of grips is optionally synchronized with the changing of the orientation of the first die relative to the second die.

12. The manufacturing method of any preceding claim, wherein each of the plurality of layers of material comprises woven fibrous material.

13. The manufacturing method of any preceding claim, wherein the preform is drawn over the die to press the die against the stack.

14. A manufacturing method, comprising:
arranging a preform with a plurality of grips, the preform comprising a stack of a plurality of layers of material, and the plurality of grips disposed along a periphery of the stack; and
forming the preform into a shaped body, the forming comprising
pressing the stack into a recess of a bottom die using a top die; and
gripping the stack with the plurality of grips during the pressing of the stack;
wherein an orientation of the top die relative to the bottom die changes as the top die moves towards the bottom die,
wherein the gripping optionally comprises asynchronously gripping the stack with a first of the plurality of grips and a second of the plurality of grips.

15. A system for forming a preform into a shaped body, the preform comprising a stack of a plurality of layers of material which include a first layer of material and a second layer of material, the system comprising:
a first die;
a second die comprising a recess, the first die configured to press the stack of the plurality of layers of material into the recess where the first die engages the first layer of material and the second die engages the second layer of material; and
a plurality of grips arrangeable along a periphery of the stack of the plurality of layers of material, the plurality of grips configured to selectively grip the stack of the plurality of layers of material as the first die presses the stack of the plurality of layers of material into the recess, the plurality of grips including a first grip and a second grip that is discretely actuatable from the first grip.
